# EUROPÄISCHE PATENTANMELDUNG

(11) **EP 1 707 440 A2**
(43) Veröffentlichungstag der Anmeldung: **04.10.2006**
(21) Anmeldenummer: 06006636.2
(22) Anmeldetag: 30.03.2006
(51) Int. Cl.: B60R 11/02, B60R 11/04, H01Q 1/12

(54) **Befestigung elektronischer Bauteile im Bereich der Windschutzscheibe eines Fahrzeuges**

(30) Priorität: 01.04.2005 DE 102005014961
(71) Anmelder: Hella KGaA Hueck & Co., 59552 Lippstadt (DE)
(72) Erfinder: Schäfer, Heiko, 59597 Erwitte (DE)

(57) **Zusammenfassung**

2.1. Vorrichtungen mit elektronischen Bauteilen wie Sensoren und Kameras werden zu einem Modul zusammengefasst und an einer vorbestimmten Stelle einer Windschützscheibe eines Kraftfahrzeugs positioniert. Hierfür wird zur Zeit das Modul mit der eingebauten Windschutzscheibe verklebt und anschließend mit einem Befestigungsteil, das im Dachbereich des Kraftfahrzeugs angeordnet ist, verbunden. Dies ist aufwändig und von den Fahrzeugherstellern unerwünscht. Deswegen soll eine Vorrichtung geschaffen werden, die einfach zu montieren ist, indem sie zuerst an dem Befestigungsteil vormontiert und nach dem Einbau der Windschutzscheibe exakt auf dieser positioniert und fixiert werden kann.
2.2. Hierfür ist die Vorrichtung (3) mit Hilfe eines Befestigungsteils (4) an einer Dachkonstruktion (2) des Kraftfahrzeugs im Dachbereich befestigbar, das Befestigungsteil (4) mittels eines flexiblen Verbindungsteils (5) mit dem Modul (6) verbunden und das Modul (6) mittels einer Positionierhilfe (11) auf der Windschutzscheibe (1) fixierbar.
2.3. Befestigung von z.B. Sensoren und Kameras an Windschutzscheiben in Kraftfahrzeugen

## Beschreibung

Die Erfindung betrifft eine Vorrichtung mit elektronischen Bauteilen gemäß dem Oberbegriff des Anspruchs 1.

Solche Vorrichtungen sind an sich bekannt und werden in Kraftfahrzeugen eingesetzt. Als elektronische Bauteile sind z.B. Messeinrichtungen, Antennen und/oder Sensoren wie Regen- Lichtsensoren, Kamerasensoren angeordnet.

Die DE 102 37 481 A1 beschreibt eine Vorrichtung in einem Kraftfahrzeug mit wenigstens einem Sensor im Bereich einer Scheibe, der in einem gemeinsamen starren Dachmodul angeordnet ist. Das Dachmodul ist am Dach befestigt. Diese bekannte Vorrichtung ist gut zu montieren, hat aber den Nachteil, dass das Dachmodul deutlich von außen zu erkennen ist und daher den optischen Gesamteindruck des Fahrzeugs stört. Das Dachmodul kann nicht genau zu einer bestimmten Stelle auf einer Windschutzscheibe positioniert werden. Weiterhin erfordert das Dachmodul im Bereich der Sensoren eine klare Windschutzscheibe.

Bei modernen Fahrzeugen ist es üblich, Bereiche der Windschutzscheiben zu schwärzen, um dahinter befindliche Gegenstände von außen unsichtbar zu machen. So sind auch Bereiche um die Stellen - genannt Fenster - geschwärzt, wo elektronische Bauteile angeordnet sind. Diese Schwärzung macht eine sehr genaue Positionierung von Modulen in den dafür vorgesehenen Fenstern erforderlich, damit die Wirksamkeit von z.B. Sensoren und Kameras einerseits und der ästhetische Eindruck andererseits nicht beeinträchtigt wird. Daher sind hier die Module mit der Innenseite der Windschutzscheibe verklebt. Beispiele für verklebte Module sind aus der EP 1 295 766 A und der US 6,170 955 bekannt. Die Verklebungen haben den Nachteil, dass sie wegen der erforderlichen genauen Positionierung schwierig durchzuführen sind. Denn die Fertigungstoleranzen der Windschutzscheiben sind relativ groß, was die automatisierte Positionierung erschwert. Weiterhin sind elektrische Anschlüsse der Module erst nach Montage der Windschutzscheibe herstellbar, was zusätzliche Kosten für z.B. Steckverbinder bewirkt und was von den Fahrzeugherstellern nicht erwünscht ist. Schließlich ist der eventuell erforderliche Austausch im Reparaturfall bei verklebten Modulen nur mit hohem Aufwand möglich.

Aufgabe der Erfindung ist es, eine Vorrichtung mit elektronischen Bauteilen zu schaffen, die an der Karosserie eines Kraftfahrzeugs vormontiert werden kann, wobei die exakte Positionierung zur Windschutzscheibe nach deren Montage erfolgt.

Die Aufgabe ist durch die Merkmale des Anspruchs 1 gelöst. Die Vorrichtung ist über ein Befestigungsteil an der Karosserie des Kraftfahrzeugs im Dachbereich befestigbar und das Befestigungsteil mittels eines flexiblen Verbindungsteils mit dem Modul verbunden. Flexibel bedeutet in diesem Zusammenhang, dass ein zweites Ende des Verbindungsteil weitgehend frei bewegt werden kann, wenn das erste Ende eingespannt oder anderweitig befestigt ist. Durch die Erfindung ist es möglich, die Vorrichtung am Fahrzeug zu montieren, bevor oder nachdem die Windschutzscheibe eingebaut ist, ohne dass ein zusätzlicher Klebeprozess oder eine sonstige aufwändige Montage erforderlich ist. Die Nachteile der bekannten Vorrichtungen werden hierbei vermieden. Das Zusammenfassen mit anderen elektrischen und/oder elektronischen Baugruppen - z.B. zu einem vormontierten Dachmodul - wird ermöglicht, wodurch entsprechende Kosten für z.B. Logistik und Einbau eingespart werden können. Das flexible Verbindungsteil gleicht die Toleranzen der Windschutzscheibe zur Karosserie aus, so dass dann die exakte Positionierung des Moduls im Fenster des Schwarzdrucks erfolgen kann. Letzteres wird durch die Positionierhilfe erleichtert.

Entsprechendes gilt für den Verfahrensanspruch.

Die Unteransprüche betreffen die vorteilhafte Ausgestaltung der Erfindung.

Die Zusammenfassung anderer elektrischer und/oder elektronischer Baugruppen in dem Befestigungsteil erleichtert insgesamt Produktion und Montage.

Die konische Ausbildung der Positionierhilfe, besonders als Kegel- oder Pyramidenstumpf, erleichtert die Montage.

Die Ausbildung des Verbindungsteils gemäß den Ansprüchen 6 bis 9 hat sich für die Herstellung als besonders gut erwiesen.

Die Erfindung wird anhand eines vereinfacht dargestellten Ausführungsbeispiels weiter erläutert. Es zeigen
Figur 1 einen Querschnitt einer Vorrichtung in eingebautem Zustand und
Figur 2 ein Modul mit einer anderen Ausführung eines flexiblen Verbindungsteils.

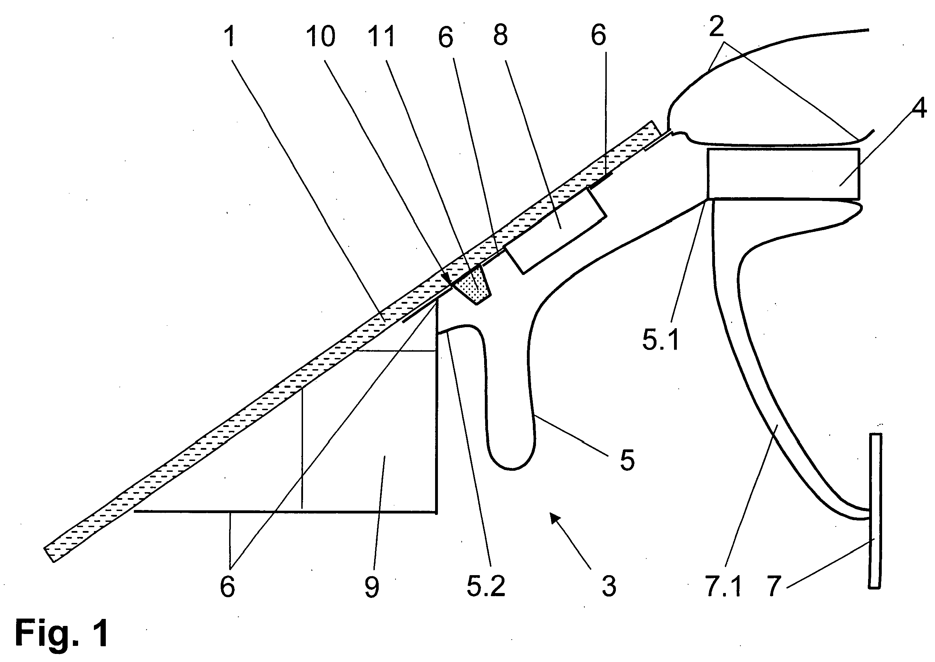

Wie aus Figur 1 ersichtlich ist in einem Kraftfahrzeug, von dem ein Teil einer Windschutzscheibe 1 und einer Dachkonstruktion 2 (als Teil einer Karosserie) dargestellt sind, eine Vorrichtung 3 mit elektronischen Bauteilen eingebaut. Die Windschutzscheibe 1 ist mit der Dachkonstruktion 2 verklebt und in vorbestimmten Bereichen mit einem Schwarzdruck mit Fenstern versehen.

Die Vorrichtung 3 umfasst ein Befestigungsteil 4, ein flexibles Verbindungsteil 5 sowie ein Modul 6.

Das Befestigungsteil 4 ist z.B. aus Kunststoff gefertigt und an der Dachkonstruktion 2 mit z.B. Schrauben befestigt. Es ist mit einem ersten Ende 5.1 des flexiblen Verbindungsteils 5 verbunden, und es sind weitere Teile, z.B. ein Rückspiegel 7 mit Fuß, und nicht dargestellt Innenraumbeleuchtung, Sensoren sowie Schalter angeordnet. Alternativ ist das flexible Verbindungsteil 5 am Fuß des Rückspiegels 7 befestigt.

Ein zweites Ende 5.2 des Verbindungsteils 5 ist mit dem Modul 6 verbunden. In diesem sind als elektronische Bauteile ein Regenlichtsensor 8 und eine Kamera 9 angeordnet. Das Modul 6 ist z.B. aus Kunststoff gefertigt und dient als Halterung und gegebenenfalls als Gehäuse für die elektronischen Bauteile. Das Modul 6 weist in einem Bereich, der vorgesehen ist, direkt an die Windschutzscheibe 1 zu grenzen, eine z.B. rechtec??kige Aussparung 10 auf. An zwei gegenüberliegenden Kanten der Aussparung 10 sind Rastelemente angeordnet.

Eine elektrische Verkabelung der elektronischen Bauteile ist in dem Verbindungsteil 5 integriert oder an diesem befestigt.

Die Flexibilität des Verbindungsteils 5 ist z.B. durch dessen Ausgestaltung gewährleistet. Hierbei ist das Verbindungsteil 5 dünnwandig aus dem gleichen Material - z.B. wenig elastischem Kunststoff - hergestellt wie das Befestigungsteil 4 und das Modul 6. Zusätzlich ist das Verbindungsteil 5 so gebogen, dass im Querschnitt eine U- förmige Vertiefung ausgebildet ist. Das Befestigungsteil 4, das Verbindungsteil 5 und das Modul 6 sind einstückig gefertigt oder aus mehreren Teilen verbunden. Die Flexibilität des Verbindungsteils 5 ergibt sich aus seiner Form, insbesondere aus der relativ geringen Materialdicke und den Biegungen.
Alternativ zu der Vertiefung ist das Verbindungsteil 5 in einem mittleren Bereich zickzack- oder wellenförmig gebogen.
In einer anderen Alternative ist das Verbindungsteil 5 aus anderem Material gefertigt als das Befestigurigsteil 4 und das Modul 6. Geeignet sind z.B. andere Kunststoffarten, die ausreichend elastisch sind, Metalle wie Federstahl und Kabelzuführungen wie Flachleiterkabel.

Auf der Windschutzscheibe 1 ist eine Positionierhilfe 11 in Form eines Pyramidenstumpfes so befestigt, dass im Zusammenspiel mit der Aussparung 10 die elektronischen Bauteile genau in den dafür vorgesehenen Fenstern des Schwarzdrucks positioniert sind. In zwei gegenüberliegenden Flanken des Pyramidenstumpfes sind Aussparungen eingelassen, die im eingebauten Zustand mit den Rastelementen des Moduls 6 eine Rastverbindung bilden.

Alternativ ist die Positionierhilfe 11 in Form eines Kegelstumpfes und die Aussparung 10 entsprechend rund ausgebildet.

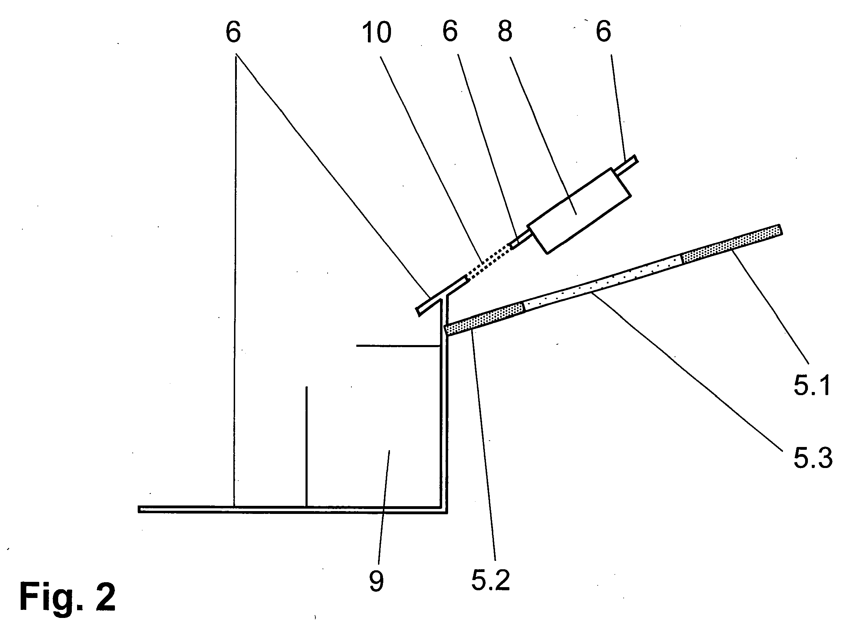

Bei einer anderen Ausführungsart gemäß Figur 2 ist das Verbindungsteil 5 aus zwei weitgehend starren Enden 5.1, 5.2 gefertigt, die durch ein hochelastisches Mittelstück 5.3 aus z.B. Silikon oder Zweikomponenten- Werkstoff verbunden sind.

Zur Montage im Kraftfahrzeug wird das mit den elektrischen Bauteilen und dem Verbindungsteil 5 vorgefertigte Modul 6 direkt oder indirekt mit dem Befestigungsteil 4 verbunden, indem es einstückig hergestellt ist oder an einer vorbestimmten Stelle des Befestigungsteils 4 aufgesetzt und eingerastet wird. Hiermit werden gleichzeitig die erforderlichen Kontakte zu der Verkabelung hergestellt. Weiterhin kann die Verbindung zwischen dem Verbindungsteil 5 und dem Befestigungsteil 4 gesichert werden, indem ein Spiegelfuß 7.1 des Spiegels 7 auf dem Befestigungsteil 4 und der Dachkonstruktion 2 angeschraubt wird, wobei das Verbindungsteil 5 zwischen Spiegelfuß 7.1 und Befestigungsteil 4 eingeklemmt ist.

Nachdem die Windschutzscheibe 1 mit der hierauf befestigten Positionierhilfe 11 in eine Karosserie des Kraftfahrzeugs eingesetzt und somit auch mit der Dachkonstruktion 2 verbunden wurde, wird das Modul 6 auf der Windschutzscheibe 1 befestigt. Hierfür wird das Modul 6 ohne wesentliche Drehung relativ zur Längsachse des Verbindungsteils 5 so zur Windschutzscheibe gebracht, dass die Aussparung 10 mit der Positionierhilfe 11 fluchtet. Hierdurch erreicht das Modul 6 relativ zur Windschutzscheibe 1 annähernd die Soll- Position, die anschließend exakt durch Aufschieben und Einrasten auf der Positionierhilfe 11 hergestellt wird.

Alternativ ist die Positionierhilfe schwalbenschwanz- förmig ausgebildet, die mit einer entsprechenden Ausformung, die an dem Modul 6 ausgebildet ist, eine Schwalbenschwanz- Verbindung ergibt.

Abschließend kann eine nicht dargestellte Verblendung montiert werden, die die Vorrichtung 3 sowie Teile des Spiegelfußes 7.1 verdeckt. Hierfür wird die Verblendung auf der Positionierhilfe 11 aufgerastet.

## Patentansprüche

1. Vorrichtung mit elektronischen Bauteilen,
wobei die Bauteile in einem Modul (6) zusammengefasst sind
und wobei die Bauteile im Bereich einer Windschutzscheibe (1) eines Kraftfahrzeugs positionierbar sind,
**dadurch gekennzeichnet, dass** die Vorrichtung (3) mit Hilfe eines Befestigungsteils (4) an einer Dachkonstruktion (2) des Kraftfahrzeugs befestigbar ist,
dass das Befestigungsteil (4) mittels eines flexiblen Verbindungsteils (5) mit dem Modul (6) verbunden ist
und dass das Modul (6) mittels einer Positionierhilfe (11) auf der Windschutzscheibe (1) fixierbar ist.

2. Vorrichtung nach Anspruch 1, **dadurch gekennzeichnet, dass** das Befestigungsteil (4) mittelbar über einen Fuss eines Rückspiegels (7) an der Dachkonstruktion (2) befestigbar ist.

3. Vorrichtung nach Anspruch 1 oder 2, **dadurch gekennzeichnet, dass** das Befestigungsteil (4) andere elektrische und/oder elektronische Baugruppen umfasst.

4. Vorrichtung nach einem der Ansprüche 1 bis 3, **dadurch gekennzeichnet, dass** die Positionierhilfe (11) konisch geformt ist.

5. Vorrichtung nach einem der Ansprüche 1 bis 3, **dadurch gekennzeichnet, dass** die Positionierhilfe (11) als Kegelstumpf ausgebildet ist.

6. Vorrichtung nach einem der Ansprüche 1 bis 4, **dadurch gekennzeichnet, dass** die Positionierhilfe (11) als Pyramidenstumpf ausgebildet ist.

7. Vorrichtung nach einem der Ansprüche 1 bis 6, **dadurch gekennzeichnet, dass** das Verbindungsteil (5) dünnwandig ist.

8. Vorrichtung nach einem der Ansprüche 1 bis 6, **dadurch gekennzeichnet, dass** das Verbindungsteil (5) eine Kabelzuführung ist.

9. Vorrichtung nach einem der Ansprüche 1, bis 8, **dadurch gekennzeichnet, dass** das Verbindungsteil (5) im Querschnitt eine U- förmige Vertiefung aufweist.

10. Vorrichtung nach einem der Ansprüche 1 bis 9, **dadurch gekennzeichnet, dass** das Verbindungsteil (5) in einem Bereich wellen- oder zickzackförmig ausgebildet ist.

11. Vorrichtung nach einem der Ansprüche 1 bis 6, **dadurch gekennzeichnet, dass** das Verbindungsteil (5) ein hochelastisches Mittelteil aufweist.

12. Vorrichtung nach einem der Ansprüche 1 bis 11, **dadurch gekennzeichnet, dass** eine Verblendung auf der Positionierhilfe (11) aufrastbar ist.

13. Verfahren zur Montage einer Vorrichtung (3) mit elektronischen Bauteilen,
wobei die elektronischen Bauteile zu einem Modul (6) zusammengefasst und auf einer Windschutzscheibe (1) positioniert werden,
**dadurch gekennzeichnet, dass** die Vorrichtung (3) zuerst an einer Dachkonstruktion (2) des Kraftfahrzeugs befestigt wird
uhd dass dann das Modul (6) mittels einer Positionierhilfe (11) auf der Windschutzscheibe (1) fixiert wird.
